Europäisches Patentamt

European Patent Office

Office européen des brevets

(19)

(11) Veröffentlichungsnummer : **0 379 635 B1**

# (12) EUROPÄISCHE PATENTSCHRIFT

(45) Veröffentlichungstag der Patentschrift :
09.10.91 Patentblatt 91/41

(51) Int. Cl.⁵ : **F16L 11/127, H05B 3/58, B60S 1/48**

(21) Anmeldenummer : **89115136.7**

(22) Anmeldetag : **17.08.89**

(54) Wärmeisoliertes Verbindungs- oder Verteilerstück für beheizbare Schläuche.

(30) Priorität : **26.01.89 DE 8900869 U**

(43) Veröffentlichungstag der Anmeldung :
**01.08.90 Patentblatt 90/31**

(45) Bekanntmachung des Hinweises auf die
Patenterteilung :
**09.10.91 Patentblatt 91/41**

(84) Benannte Vertragsstaaten :
**AT BE DE FR GB IT LU NL SE**

(56) Entgegenhaltungen :
**DE-A- 2 300 627**

(73) Patentinhaber : **REHAU AG + Co
Rheniumhaus
W-8673 Rehau (DE)**

(72) Erfinder : **Hopperdietzel, Siegfried, Dr.
Friedrichstrasse 18
W-8672 Selb (DE)**

## Beschreibung

Die Neuerung betrifft ein wärmeisoliertes Verbindungs- oder Verteilerstück für beheizbare Schläuche, wobei die Schlauchbeheizung über Heizleiter erfolgt, die längsverlaufend in oder an der Schlauchwandung angeordnet sind, bestehend aus einem in das Schlauchlumen eingesetzten Verbindungselement und einer Isolierung.

Aus dem DE-U-8622603 ist ein beheizbarer Schlauch bekannt, bei dem parallel zum Lumen ein Heizleiter in der Schlauchwandung angeordnet ist. Das Lumen ist aus der Schlauchachse einseitig versetzt, so daß auf der anderen Seite eine Querschnittsverdickung eintritt, in welche der Heizleiter eingebettet ist. Der Schlauchwandbereich zwischen dem Lumen und dem Heizleiter ist dabei im Querschnitt dünner als der Schlauchwandbereich zwischen dem Heizleiter und der benachbarten Oberfläche des Schlauches.

Aus dem DE-U-8704903 ist ein wärmeisoliertes Verbindungs- oder Verteilerstück für solche beheizbaren Schläuche bekannt, welches aus einem in das Schlauchlumen teilweise eingesetzten Verbindungselement aus wärmeleitfähigem Material und einer Isolierung besteht. Die Heizleiter der beheizbaren Schläuche sind an den freien Enden durch Entfernen der Schlauchwandung freigelegt und um die aus dem Lumen der Schläuche herausragenden Teilbereiche des Verbindungselementes herumgelegt. Ein Heizleiter-Anschlußstück ist aus diesem Bereich herausgeführt und die Kombination der freien Enden der zu verbindenden Schlauchleitungen mit den aus den Schlauchleitungen herausragenden Teilbereichen des Verbindungselementes und den um diese herausragenden Teilbereiche des Verbindungselementes gewickelten Heizleitern ist als unlösbares Blockelement mit einer Umhüllung aus Isoliermaterial umspritzt. Obwohl sich auf diese Weise eine einwandfreie Verbindung von beheizbaren Schläuchen unter Mitbeheizung des Verbindungselementes ergibt, ist die Herstellung einer solchen Verbindung aufwendig und arbeitsintensiv, da die Verbindungsstelle der Schläuche einschließlich der Elektroverbindung in ein Umspritzungswerkzeug eingesetzt und dort mit dem Isoliermaterial umspritzt werden muß.

Hier setzt die Neuerung ein, die es sich zur Aufgabe gestellt hat, ein Verbindungs- oder Verteilerstück für beheizbare Schläuche zu schaffen, welches auf einfache Weise eine dichte und isolierende Abdeckung der Verbindungsstelle zwischen den Schlauchstücken schafft. Neuerungsgemäß wird dazu vorgesehen, daß die Abdeckung ein in der Längsachse geteiltes Hüllrohr aufweist, dessen beide Halbschalen, zwischen denen ein Innenraum zum Isolierzweck verbleibt, über Verbindungsmittel unter Abdeckung der freien Enden der zu verbindenden Schläuche aufeinander festlegbar sind, und daß an der äußeren Oberfläche des Verbindungselementes im Bereich des Einsatzes in das Schlauchlumen auf dem Umfang verteilte, in Einschubrichtung an Dicke zunehmende Materialabstufungen angeformt sind, welche mit an inneren Umfang der Halbschalen angeformten Druckstegen bei der Halterung des Schlauches auf dem Verbindungselement in klemmende Wirkverbindung treten.

Es hat sich hierbei als vorteilhaft herausgestellt, daß der verbleibende Innenraum zwischen den Halbschalen, den zu verbindenden Schlauchenden, den aus den Schlauchlumen herausragenden Teilen der Verbindungselemente und den im Innenraum zwischen den Halbschalen geführten Heizleitern mit einer Isoliermasse verfüllbar ist.

Die Verbindung zweier Schläuche unter Verwendung des neuerungsgemäßen Verbindungs- oder Verteilerstücks ist denkbar einfach. Zunächst wird das Verbindungselement in die Schlauchlumen zweier zu verbindender Schläuche an deren freien Enden eingesetzt. Diese Schlauchenden sind so präpariert, daß die Heizleiter an den freien Schlauchenden durch Entfernen der Schlauchwandung freigelegt und miteinander elektrisch leitend verbunden sind. Nach Durchführung dieser elektrisch leitenden Verbindung, die in der Regel ein Lötverbindung ist, wird diese Schlauchverbindung in die untere Halbschale des geteilten Hüllrohres eingelegt. Danach wird die obere Halbschale auf die untere Halbschale aufgerastet und dadurch das gesamte Verbindungs- oder Verteilerstück abgedeckt. Die isolierende Innenmasse kann vor oder nach der rastenden Abdeckung durch die beiden Halbschalen in den verbleibenden Innenraum eingebracht werden. Die Isolierung kann aus einem schäumfähigen Material bestehen, welches die verbleibenden Innenräume des Verbindungs- oder Verteilerstücks hinterschäumt und somit einen kompakten Isoliermantel bildet.

Die Verbindungsmittel der beiden Halbschalen können Rast- und/oder Steckelemente sein. Mit diesen Verbindungsmitteln läßt sich ein dauerhafter Sitz der beiden Halbschalen aufeinander unter Einschluß der einzelnen Verbindungselemente der beheizbaren Schläuche herstellen. Zusätzlich zu diesen Verbindungsmitteln können die freien Enden der Halbschalen als Ringklemmen ausgebildet sein, durch welche die umfaßten Schlauchbereiche zusätzlich fest gehaltert werden, so daß ein Abziehen dieser Schlauchbereiche von den in die Schlauchlumen eingesetzten Verbindungselementen unmöglich wird.

In der Zeichnung sind Ausführungsbeispiele des neuerungsgemäßen Verbindungs- oder Verteilerstücks schematisch dargestellt ; es zeigt :

Fig. 1 ein Verbindungsstück für Längsverbindung zweier Schläuche.

Fig. 2 ein Y-förmiges Verbindungs- oder Verteilerstück im Längsschnitt.

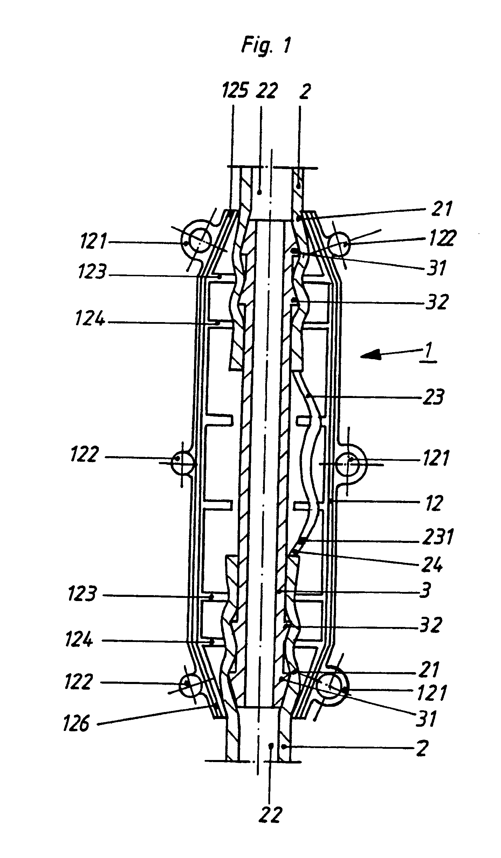

Fig. 1 zeigt im Längsschnitt ein Verbindungsstück für die Längsverbindung zweier Schläuche 2. In der gezeigten Darstellung ist lediglich die untere Halbschale 12 des aus zwei Halbschalen 11, 12 bestehenden Hüllrohres 1 sichtbar. In diese Halbschale sind die freien Enden der Schläuche 2 eingelegt, die zuvor über das Verbindungselement 3 miteinander verbunden worden sind. Diese Verbindung geschieht auf die Weise, daß Teilbereiche des Verbindungselementes 3 in das Lumen der Schläuche 2 an deren freien Enden eingesetzt sind. Die in das Schlauchlumen eingesetzten Teilbereiche des Verbindungselementes 3 besitzen auf dem Umfang verteilt in Einschubrichtung an Dicke zunehmenden Materialabstufungen 31, 32, welche ein leichtes Abziehen der Schlauchenden von dem Verbindungselement 3 verhindern. In der Halbschale 12 sind im Bereich der freien Enden Druckstege 123, 124 ausgeformt, welche beim Einsetzen der Schlauchverbindung in die Halbschale in klemmende Wirkverbindung mit den Materialabstufungen treten. Dabei wird der flexible Schlauchabschnitt, der über den eingesetzten Bereichen des Verbindungselementes 3 liegt, von den Druckstegen 123, 124 zusätzlich hinter die Materialabstufungen 31, 32 gedrückt.

Auf diese Weise wird eine nahezu unlösbare Sperre des Schlauchendes auf dem eingesetzten Bereich des Verbindungselementes 3 geschaffen. Als zusätzliche Sicherung sind die freien Enden der Halbschalen 11, 12 als Ringklemmen 125, 126 ausgebildet. Auf diese Weise wird beim Einsetzen der Kombinationsverbindung der beiden Schlauchenden mit dem Verbindungselement 3 in die Halbschale 12 im Bereich der Ringklemmen 125, 126 eine Absperrung geschaffen, die beim Aufclipsen der in der Zeichnung nicht dargestellten Halbschale 11 auf die Halbschale 12 eine ringförmige Absperrung des Halbschaleninnenraums bewirkt. In diesen Innenraum kann vor der Verbindung der beiden Halbschalen 11, 12 ein fließfähiges Isoliermittel eingebracht werden, das nach der Halbschalenverbindung den zwischen den Halbschalen und der Kombinations-Schlauchverbindung verbleibenden Innenraum vollständig ausfüllt. Ein Herausfließen des Isoliermaterials wird durch die Ringklemmen 125, 126 an den freien Enden der Halbschalen 11, 12, verhindert. Das Isoliermaterial kann aber auch in den durch das Zusammenfügen der beiden Halschalen 11, 12 gebildeten Innenraum nachträglich über eine entsprechende Einfüllöffnung eingebracht werden. Es kann sich hierbei um ein schäumfähiges Isoliermaterial handeln, welches nach dem Aufschäumen auch die Einfüllöffnung dichtend und isolierend verfüllt.

Vor dem Zusammensetzen der beiden Halbschalen 11, 12 muß schließlich noch die elektrische Verbindung der beiden Heizdrähte 23, 24 vorgenommen werden, die in der Regel eine Lötverbindung 231 ist.

Es ist bereits darauf verwiesen worden, daß in Fig. 1 nur die untere Halbschale 12 dargestellt ist.

Die obere Halbschale 11 ist spiegelbildlich dazu gefertigt und kann über die Verbindungsmittel 111, 112 mit den Verbindungsmitteln 121, 122 der unteren Halbschale 12 zusammengefügt werden. Die Verbindungsmittel 121 können dabei Stecköffnungen sein, in welche entsprechende Steckstifte, die an der zugeordneten Stelle der oberen Halbschale 11 angeordnet sind, eingeführt werden. An der unteren Halbschale 12 sind drei solcher Stecköffnungen 121 über die Länge verteilt angeordnet, während in gleicher Verteilung gegenüberliegend entsprechende Steckstifte 122 angeformt sind. Die entsprechenden Verbindungsmittel sind an den gegenüberliegenden Seiten der nicht gezeigten Halbschale 11 angeordnet.

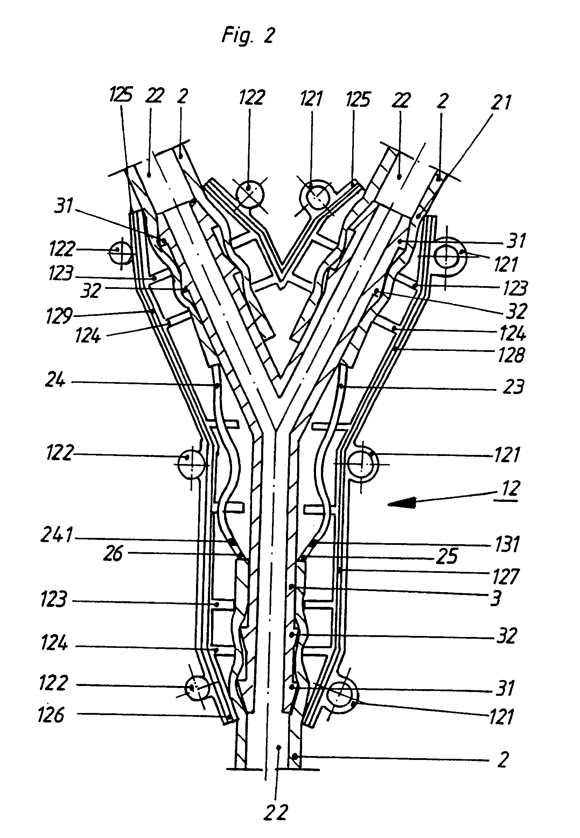

Das in Fig. 2 gezeigte Y-förmige Verbindungs- oder Verteilerstück ist in der gleichen Darstellungsform gezeigt wie das Verteilerstück der Fig. 1. Die untere Halbschale 12 besitzt ein Basisteil 127 und von diesem im Y-Winkel abstehende Oberteile 128, 129. Diese Teilbereiche 127, 128, 129 besitzen die gleiche Innenausstattung wie die gestreckten Teilbereiche in Fig. 1. Gleiche Merkmale haben hier gleiche Bezugszeichen erhalten. Die in den Oberteilen 128, 129 gehalterten Schläuche 2 besitzen jeweils einen Heizdraht 23, 24, der mit den Drähten 25, 26 über die Lötverbindungen 231, 241 in leitender Verbindung steht.

Das Zusammenführen der beiden Halbschalen 12, 12 erfolgt in gleicher Weise wie zu Fig. 1 beschrieben. Auch das Verfüllen der verbleibenden Spaltbereiche zwischen den beiden zusammengefügten Halbschalen 11, 12 erfolgt in gleicher Weise.

**Patentansprüche**

1. Verbindungs- oder Verteilerstück für beheizbare Schläuche, wobei die Schlauchbeheizung über Heizleiter erfolgt, die längsverlaufend in oder an der Schlauchwandung angeordnet sind, bestehend aus einem in das Schlauchlumen eingesetzten Verbindungselement und einer Isolierung, dadurch gekennzeichnet, daß die Isolierung ein in der Längsachse geteiltes Hüllrohr (1) aufweist, dessen beide Halbschalen (11, 12), zwischen denen ein Innenraum zum Isolierzweck verbleibt, über Verbindungsmittel (111, 112, 121, 122) unter Abdeckung der freien Enden (21) der zu verbindenden Schläuche (2) aufeinander festlegbar sind, und daß an der äußeren Oberfläche des Verbindungselementes (3) im Bereich des Einsatzes in das Schlauchlumen (22) auf dem Umfang verteilt, in Einschubrichtung an Dicke zunehmende Materialabstufungen (31, 32) angeformt sind, welche mit am inneren Umfang der Halbschalen (11, 12) angeformten Druckstegen (113, 114, 123, 124) bei der Halterung des Schlauches auf dem Verbindungselement in klemmende Wirkverbindung treten.

2. Verbindungs- oder Verteilerstück nach Anspruch 1, dadurch gekennzeichnet, daß der verbleibende Innenraum zwischen den Halbschalen (11, 12) den zu verbindenden Schlauchenden (2) dem aus dem Schlauchlumen herausragenden Verbindungselement (3) und den im Innenraum geführten Heizleitern (23, 24) mit einer Isoliermasse verfüllbar ist.

3. Verbindungs- oder Verteilerstück nach Anspruch 1, dadurch gekennzeichnet, daß die Verbindungsmittel (111, 112, 121, 122) der Halbschale (11, 12) Rast- und/oder Steckelemente sind.

4. Verbindungs- oder Verteilerstück nach Anspruch 1, dadurch gekennzeichnet, daß die freien Enden der Halbschalen (11, 12) als zusätzliche Ringklemmen (125, 126) ausgebildet sind.

## Revendications

1. Pièces de raccord ou d'embranchement pour tuyaux flexibles chauffables, le chauffage des tuyaux étant assuré par des conducteurs chauffants installés longitudinalement dans ou sur la paroi du tuyau flexible, se composant d'un élément de fixation inséré à l'intérieur du tuyau flexible et d'une isolation, ceci caractérisé par le fait que l'isolation présente une gaine (1) séparée dans l'axe longitudinal et dont les deux moitiés (11, 12), entre lesquelles il reste un espace à des fins d'isolation, sont superposables par l'intermédiaire des moyens de raccord (111, 112, 121, 122) en recouvrant les extrémités libres (21) des tuyaux flexibles (2) à relier et par le fait qu'elles sont réparties à la surface supérieure extérieure de l'élément de fixation (3) dans la zone de l'insertion à l'intérieur du flexible (22) sur la périphérie et façonnées dans le sens de l'introduction sur les étalonnements de matériau (31, 32) s'épaississant, lesquels ont un effet de raccord de serrage par les barrettes de pression (113, 114, 123, 124) façonnées sur la périphérie intérieure des moitiés de gaine (11, 12) sur le support du tuyau flexible.

2. Pièces de raccord ou d'embranchement selon la revendication 1, caractérisées par le fait que l'espace intérieur restant entre les moitiés (11, 12), entre les extrémités des flexibles à relier (2), entre l'élément de fixation dépassant de l'intérieur du flexible (3) et entre les conducteurs chauffants (23, 24) introduits dans l'espace intérieur peut être rempli d'une masse isolante.

3. Pièces de raccord ou d'embranchement selon la revendication 1, caractérisées par le fait que les moyens de raccord (111, 112, 121, 122) des moitiés (11, 12) sont des éléments encliquetables et/ou emboîtables.

4. Pièces de raccord ou d'embranchement selon la revendication 1, caractérisées par le fait que les extrémités libres des moitiés (11, 12) sont réalisées pour servir de serrages annulaires (125, 126) supplémentaires.

## Claims

1. Connector or distributor piece for heatable tubes (heated by heating conductors running in linear fashion in or on the tube wall) consisting of a connecting element inserted into the tube lumen as well as an insulator, characterised by the fact that the insulator comprises a logitudinally split tubular jacket (1), the two halves (11, 12) of which, when joined together by means of fastening elements (111, 112, 121, 122), form an insulating chamber and cover the free ends (21) of the tubes (2) to be connected, and also characterised by the fact that at the point of insertion into the tube lumen (22), the outer surface of the connecting element (3) features integrated notches (31, 32) around its circumference gaining in thickness in the direction of insertion, which, in conjunction with the thrust webs (113, 114, 123, 124) moulded onto the inner circumference of the tubular jacket halves (11, 12) clamp the tube against the connecting element, thus holding it firmly in position.

2. Connector or distributor as described in claim 1, characterised by the fact that the space between the tubular jacket halves (11, 12), the tube ends to be connected (2), the connecting element (3) projecting out of the tube lumen and the heating conductors (23, 24) routed inside the chamber, can be filled with an insulating compound.

3. Connector or distributor as described in claim 1, characterised by the fact that the fastening elements (111, 112, 121, 122) on the tubular jacket halves (11, 12) are configured in the form of clip-type and/or push-fit elements.

4. Connector or distributor as described in claim 1, characterised by the fact that the free ends of the tubular jacket halves (11, 12) are structured to form additional ring-shaped clamps (125, 126).

## Fig. 1

Fig. 2